(19) Europäisches Patentamt

European Patent Office

Office européen des brevets

(11) Veröffentlichungsnummer: **0 070 847**
**B1**

(12) **EUROPÄISCHE PATENTSCHRIFT**

(45) Veröffentlichungstag der Patentschrift:
29.05.85

(51) Int. Cl.⁴: **G 02 B 27/00**, G 02 B 23/00

(21) Anmeldenummer: 82900351.6

(22) Anmeldetag: 06.02.82

(86) Internationale Anmeldenummer:
PCT/DE 82/00023

(87) Internationale Veröffentlichungsnummer:
WO 82/02778 (19.08.82 Gazette 82/20)

(54) OPTISCHES GERÄT FÜR GROSSE ABBILDUNGSMASSSTÄBE.

(30) Priorität: 10.02.81 DE 3104545

(43) Veröffentlichungstag der Anmeldung:
09.02.83 Patentblatt 83/6

(45) Bekanntmachung des Hinweises auf die Patenterteilung:
29.05.85 Patentblatt 85/22

(84) Benannte Vertragsstaaten:
AT BE CH DE FR GB LI LU NL SE

(56) Entgegenhaltungen:
DE - C - 757 079
FR - A - 943 810
US - A - 2 651 238
US - A - 2 946 255
US - A - 3 552 832

ABC Der Optik, herausgegeben in 1961 von VEB Edition
Leipzig (DE), K. Mütze u.a., s. Seiten 762-763
Die wissenschaftliche und angewandte Photographie,
herausgegeben in 1962 von Springer-Verlag, Wien (OE),
K. Michel, s. Seiten 61-70

(73) Patentinhaber: SCHLUE, Bernd, Eggensteiner
Strasse 41, D-7550 Karlsruhe 21 (DE)

(72) Erfinder: SCHLUE, Bernd, Eggensteiner Strasse 41,
D-7550 Karlsruhe 21 (DE)

(74) Vertreter: Zipse & Habersack, Lessingstrasse 12,
D-7570 Baden-Baden (DE)

## Beschreibung

Die Erfindung betrifft ein leicht fokussierbares optisches Gerät für große Abbildungsmaßstäbe mit vorwählbarem Arbeitsabstand sowohl für visuelle Beobachtung als auch für photographische, kinematographische oder elektronische Kameras.

Bekanntlich sinkt mit wachsendem Abbildungsmaßstab bzw. mit zunehmender Vergrößerung des Sehwinkels die Schärfentiefe überproportional, außerdem verringert sich der Arbeitsabstand. Die Erfindung bezweckt, ein leicht fokussierbares Gerät zu schaffen, mit dem bei größeren Abbildungsmaßstäben größere Arbeitsabstände erzielt werden.

Es sind eine Reihe von optischen Geräten allgemein bekannt, die dazu dienen, große Abbildungsmaßstäbe bzw. vergrößerte Sehwinkel zu erzielen. Neben der Lupe zählen hierzu das einfache Mikroskop, das zusammengesetzte Mikroskop, die Fernrohre vom Galileischen und Keplerschen Typ, das Fernobjektiv, das langbrennweitige Objektiv in sogenannter Tele-Konstruktion sowie das Lupenobjektiv in Verbindung mit Balgenauszugsgeräten. Sofern es sich dabei um mehrstufige Systeme handelt, wird im folgenden nur die erste Abbildungsstufe betrachtet.

Allen optischen Geräten dieser Art ist gemeinsam, daß sich mit wachsenden Abbildungsmaßstäben eine Verringerung des Arbeitsabstandes ergibt. Bei den eingangs erwähnten optischen Geräten lassen sich die Beziehungen zwischen Arbeitsabstand und Abbildungsmaßstab näherungsweise mittels der allgemein bekannten Linsenformel angeben:

$$\frac{1}{f} = \frac{1}{g} + \frac{1}{b} \qquad\qquad \text{(Formel 1)}$$

Mit

$$beta = b/g \qquad\qquad \text{(Formel 2)}$$

werden

$$g = f + \frac{f}{beta} \qquad\qquad \text{(Formel 3)}$$

und

$$b = f + f \cdot beta \qquad\qquad \text{(Formel 4)}$$

Darin bedeuten:

f: Brennweite
g: Gegenstandsweite
b: Bildweite
beta: Abbildungsmaßstab

Bei einer vorgegebenen Brennweite verändert sich demnach der Arbeitsabstand (entsprechend der Gegenstandsweite g) umgekehrt proportional zum Abbildungsmaßstab beta (Formel 3). Bei großen Abbildungsmaßstäben, wie sie in der Lupenfotografie und schließlich beim Mikroskop erzielt werden, wird bekanntlich der Arbeitsabstand so klein, daß die Beleuchtungsprobleme nur noch mit besonderen hierfür geschaffenen Beleuchtungsvorrichtungen zu bewerkstelligen sind. Bekanntlich ist dabei von beachtlichem Nachteil, daß eine freie Lichtführung zum Zwecke der plastischen Ausleuchtung des Betrachtungs- oder Aufnahme-Gegenstandes nicht mehr möglich ist.

Die hier dargestellten Zusammenhänge gelten für die Beschreibung der geometrischen Verhältnisse bei den eingangs erwähnten optischen Geräten: Das Problem des geringen Arbeitsabstandes und das Schärfentiefe-Problem machen sich nachteilig, auch beim Lupenobjektiv und beim Mikroskop, bemerkbar.

Auch im Hinblick auf die Fokussierung zeigen die erwähnten bekannten optischen Geräte erhebliche Nachteile. Bei einem Teil der bisher bekannten Geräte zur Mikroskopie und zur Makro- und Mikrofotografie findet die Fokussierung in der Weise statt, daß der das Aufnahme- oder Betrachtungs-Objekt tragende Tisch mittels Zahntrieb längs der optischen Achse bewegt wird. Da von einem solchen Zahntrieb für Zwecke der Fokussierung ein spielfreier Lauf verlangt werden muß, handelt es sich dabei um entsprechend aufwendige, feinmechanische Konstruktionen. Dem Gewicht und der Ausdehnung des Objektes sind dabei naturgemäß enge Grenzen gesetzt.

Ebenso erfordern jene Geräte zur Mikroskopie und zur Makro- und Mikrofotografie einen sehr hohen feinmechanischen Aufwand, bei denen das gesamte optische System — samt Aufnahmevorrichtung — zum Zwecke der Fokussierung längs der optischen Achse bewegt wird.

Zur Vermeidung des Zahnspiels hat man Geräte zur Makrofotografie auch schon mit justierbaren Rollenlagern und Reibradantrieben ausgerüstet, welche jedoch zusammen mit den Laufschienen ebenfalls außergewöhnliche Ansprüche an feinmechanische Präzision stellen (vgl. Druckschrift D/-8000/4 der Firma Pignons S. A., CH-1338 Ballaigues, »Alpa-System«, Seite 4, Balgengerät und Einstellschlitten Alpa-Combextan, o. O., o. J.).

Der Erfindung liegt die Aufgabe zugrunde, ein leicht fokussierbares optisches Gerät zu schaffen, das die Nachteile der geschilderten Art vermeidet, welche sich bei großen Abbildungsmaßstäben allgemein aus den kleinen Arbeitsabständen ergeben.

Erfindungsgemäß wird diese Aufgabe durch die im Anspruch 1 gekennzeichneten Mittel gelöst.

Durch Wahl der numerischen Apertur des Gesamtsystems kann die Tiefenschärfe in bekannter Weise den Anforderungen angepaßt werden.

Für die visuelle Beobachtung des Endbildes dient zweckmäßigerweise ein Okular in einer der allgemein bekannten Bauformen, während für die Registrierung des Endbildes eine in allgemein bekannter Weise angekuppelte Kamera dient.

Ein solches leicht fokussierbares optisches Gerät für große Abbildungsmaßstäbe und mit vorwählbarem Arbeitsabstand gestattet es zunächst, vor der Betrachtung oder Abbildung mittels Kamera die Tiefenausdehnung des Betrachtungs- oder Aufnahmegegenstandes zu berücksichtigen.

Zur Beschreibung der das vorgeschlagene Gerät kennzeichnenden geometrischen Verhältnisse muß von der Art abgewichen werden, nach welcher die geometrischen Verhältnisse der bisher bekannten optischen Geräte beschrieben werden, indem üblicherweise von einem bildseitig gelegenen Schirm, oder abstrahierend davon, von einer Bildebene ausgegangen wird, in der das Bild des abzubildenden Gegenstandes erscheint.

Das Vorhandensein eines Schirmes ist jedoch nicht von konstitutiver Bedeutung für den Abbildungsvorgang. Insofern kann der Abbildungsvorgang betrachtet werden, ohne das Augenmerk auf eine bestimmte Bildebene zu legen.

Wird ein optisches System zum Zwecke der Abbildung auf einen Gegenstandsbereich gerichtet, welcher in einem Abstand von 2 f (f: Brennweite des Systems) von der gegenstandsseitigen Hauptebene beginnt und sich bis unendlich erstreckt, so wird dieser Gegenstandsbereich innerhalb der Strecke abgebildet, welche im Abstand f' von der bildseitigen Hauptebene beginnt und sich bis zur Entfernung 2 f' erstreckt und umgekehrt.

In dem hier vorgeschlagenen, leicht fokussierbaren optischen Gerät für große Sehwinkel und Abbildungsmaßstäbe mit erweitertem Schärfebereich und vorwählbarem Arbeitsabstand wird die Tiefenausdehnung t des abzubildenden Objekts S als Teilstrecke des Gegenstandsbereichs zwischen $2 f_a$ und unendlich mittels des gegenstandsseitig gelegenen Objektivs $O_a$ als Abschnitt t' innerhalb des Bildbereiches zwischen den Entfernungen $f'_a$ und $2 f'_a$ abgebildet. Charakteristisch für diese Abbildung ist eine enorme Stauchung, die um so größer ist, je größer die Entfernung des Objekts vom optischen System ist.

Das betrachter- bzw. kameraseitige Objektiv $O_v$ ist in dem optischen Gerät nunmehr in der Weise in Stellung gebracht, daß eine Abbildung des abzubildenden Objekts S mit dem gewünschten Maßstab entsteht.

Anhand einer Tabelle wird die Funktionsweise des leicht fokussierbaren optischen Gerätes für große Abbildungsmaßstäbe und vorwählbarem Arbeitsabstand verdeutlicht. Da die Objektive des vorgeschlagenen optischen Gerätes zweckmäßigerweise auswechselbar sind, um verschiedene Brennweiten zum Einsatz bringen zu können, werden die zu betrachtenden Strecken auf $f_a$ normiert dargestellt ($f_a$: Brennweite des im vorderen Geräteteil untergebrachten Objektivs $O_a$).

Tabelle
zur Verdeutlichung der Funktionsweise des vorgeschlagenen optischen Gerätes

| i | G(i) | ga(i) | $\text{beta } a(i) = \dfrac{fa}{ga(i) - fa}$ | $ba(i) = fa + fa \text{ beta } a(i)$ | t(i/j)' |
|---|------|-------|------|------|---------|
| 1 | G(1) | 2 fa | 1 | 2 fa | |
| | | | | | 1/2 fa |
| 2 | G(2) | 3 fa | 1/2 | 3/2 fa | |
| | | | | | 1/6 fa |
| 3 | G(3) | 4 fa | 1/3 | 4/3 fa | |
| | | | | | 1/12 fa |
| 4 | G(4) | 5 fa | 1/4 | 5/4 fa | |
| | | | | | 1/20 fa |
| 5 | G(5) | 6 fa | 1/5 | 6/5 fa | |
| | | | | | 1/30 fa |
| 6 | G(6) | 7 fa | 1/6 | 7/6 fa | |
| | | | | | 1/42 fa |
| 7 | G(7) | 8 fa | 1/7 | 8/7 f | |
| | | | | | 1/56 fa |
| 8 | G(8) | 9 fa | 1/8 | 9/8 f | |
| | | | | | 1/72 fa |
| 9 | G(9) | 9 fa | 1/9 | 10/9 | |
| | | | | | 1/90 fa |
| 10 | G(10) | 11 fa | 1/10 | 11/10 fa | |

Anmerkungen zur 4. Spalte: beta a(i) gemäß Formel 3.
5. Spalte: Vgl. Formel 4.

In der Tabelle bedeuten:

$fa$ = Brennweite des Objektivs $O_a$ im vorderen Geräteteil
$G(i)$ = Gegenstandspunkt an der Stelle i auf der optischen Achse
$ga(i)$ = Gegenstandsweite des Gegenstandspunktes $G(i)$
$beta\ a(i)$ = Der sich aus der Gegenstandsweite $ga(i)$ ergebende Abbildungsmaßstab
$ba(i)$ = Die zur Gegenstandsweite $ga(i)$ gehörende Bildweite
$t(i/j)'$ = Die durch Abbildung des Objektivs $O_a$ aus der zwischen den Punkten i und j liegenden Tiefenausdehnung $t(i/j)$ des Objekts S hervorgegangene Strecke.

Anhand eines Beispiels wird die Tabelle verdeutlicht. Die Tabelle ist folgendermaßen zu lesen:

1. Der Gegenstandspunkt G(5) befinde sich im Abstand von 6 fa von der gegenstandsseitigen Hauptebene entfernt. Aus der Gegenstandsweite von 6 fa ergibt sich der Abbildungsmaßstab beta a(5) = 1/5. Die zugehörige Bildweite beträgt ba(5) = 6/5 fa.
2. Der Gegenstandspunkt G(4) befinde sich im Abstand von 5 fa von der gegenstandsseitigen Hauptebene entfernt. Aus der Gegenstandsweise 5 fa ergibt sich der Abbildungsmaßstab beta a(4) = 1/4. Die zugehörige Bildweite beträgt ba(4) = 5/4 fa.
3. Die zwischen den Gegenstandspunkten G(4) und G(5) liegende Tiefenausdehnung t(5/4) von der Länge fa wird durch das System $O_a$ abgebildet als Strecke t′ = ba(4)−ba(5) = (5/4−6/5) fa = 1/20 fa.

In Richtung der optischen Achse ergibt sich für das obige Beispiel eines Gegenstandes S mit der Tiefenausdehnung t(i/j) = fa und der angenommenen Lage zwischen 5 fa und 6 fa von der Hauptebene entfernt ein axialer Abbildungsmaßstab

$$\text{beta } a_{ax} = \frac{t(5/4)'}{t(5/4)} = \frac{1/20\ fa}{fa} = 1/20$$

und senkrecht zur optischen Achse ergeben sich Abbildungsmaßstäbe zwischen 1/4 und 1/5. Es ist leicht zu erkennen, daß mit zunehmender Gegenstandsweite ga der Abbildungsmaßstab in axialer Richtung schneller sinkt als die Abbildungsmaßstäbe senkrecht zur optischen Achse.

In dem hinteren, zum Betrachter bzw. zur Kamera gelegenen Geräteteil mit dem Objektiv $O_v$ wird von dem räumlichen Zwischenbild mit der axialen Ausdehnung t′ ein Bild mit dem gewünschten Abbildungsmaßstab erzeugt.

Eine vorteilhafte Handhabung des vorgeschlagenen optischen Gerätes ergibt sich dadurch, daß der Arbeitsabstand durch Wahl einer entsprechenden Brennweite vorgewählt werden kann. Die Fokussierung wird zweckmäßigerweise mittels einer das Abbildungssystem des vorderen Geräteteils tragenden, allgemein bekannten Einstell-Schneckengangfassung vorgenommen.

Auch wenn das vorgeschlagene optische Gerät mit einem Abbildungsmaßstab > 1 abbildet, gilt für den vorderen Geräteteil, daß die Gegenstandsweite in der Regel deutlich größer als die Bildweite ist, weshalb auch dann die Fokussierung auf vorteilhafte Weise mittels einer Schneckengangfassung vorgenommen werden kann. Dadurch werden aufwendige feinmechanische Konstruktionen zur axialen Verschiebung des Objektes oder des gesamten optischen Gerätes einschließlich einer eventuell vorhandenen Aufnahmevorrichtung vermeidbar.

Die Erfindung ist nachstehend in maßstabsfreier zeichnerischer Darstellung anhand von bevorzugten Ausführungsbeispielen wiedergegeben. In den Zeichnungen zeigt
Fig. 1 einen Schnitt durch ein Gerät mit einem besonders vorteilhaften Fokussiermechanismus.
Fig. 2 zeigt die Ausführungsform nach Fig. 1 mit einem Tisch-Stativ.
Fig. 3 zeigt das optische Gerät an einem Erdspieß befestigt.
Fig. 4 zeigt eine andere Ausführungsform des optischen Gerätes gemäß der Erfindung.
Fig. 5 zeigt eine Ausführungsform des optischen Gerätes zur vorteilhaften Anwendung in der medizinischen Kolposkopie.
Fig. 6 zeigt eine einfachere Ausführung des optischen Gerätes zum Zwecke der Amateur-Fotografie.
Fig. 7 zeigt eine weitere Ausführungsform des optischen Gerätes.
Fig. 8 zeigt eine Ausführungsform des optischen Gerätes zum Einsatz in verschiedenen Gebieten der Mikro-Chirurgie.

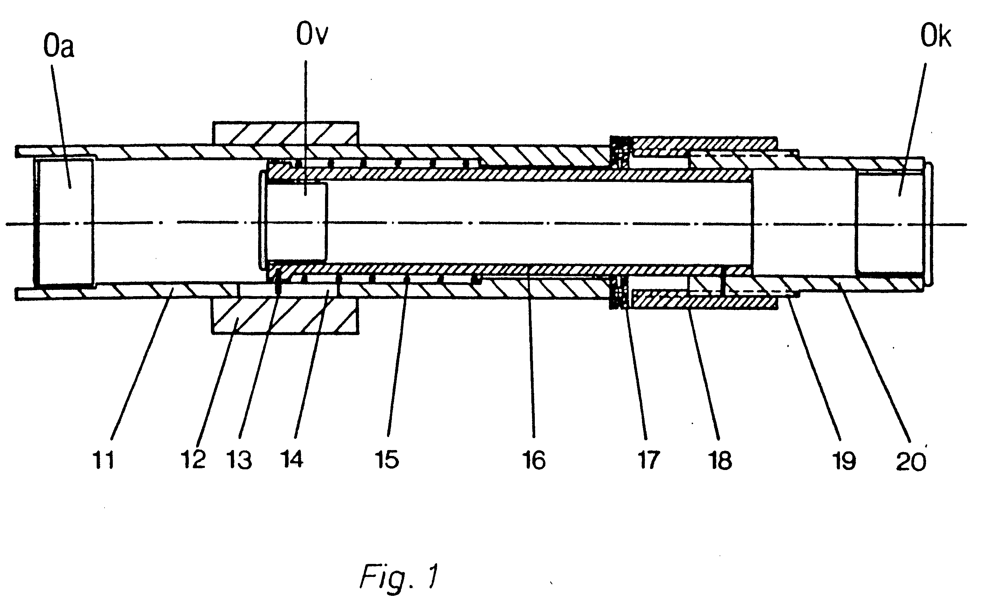

Wie sich aus Fig. 1 ergibt, befindet sich das objektseitige Objektiv Oa in dem äußeren Tubus 11, der axial verschieblich auf dem inneren Tubus 16 sitzt. An diesem inneren Tubus 16 ist der Okulartubus 20 befestigt, der das Okular Ok trägt. Der Okulartubus 20 besitzt ein Außengewinde 19, auf welchem der gerändelte Drehring 18 mit einem davor angebrachten Axial-Kugellager 17 sitzt. Durch Rechtsdrehen dieses Drehringes 18 in Richtung des Objekts bewegt sich der Okulartubus 20 in Richtung des Betrachters hinter dem Okular Ok und damit auch der am Okulartubus 20 befestigte innere Tubus 16 mit dem daran angebrachten Objektiv Ov. Bei Linksdrehen des gerändelten Drehrings 18 in Richtung des Okulars Ok sorgt die vorgespannte Feder 15 für eine Verschiebung des inneren Tubus 16 mit dem daran befestigten Okulartubus 20 in Richtung des Objektivs Oa. Diese vorgespannte Feder 15 drückt auch das durch das Gewinde bedingte Spiel heraus. Zur Führung des inneren Tubus 16 dient der daran befestigte Zapfen 13, der in dem dem Fokussierhub entsprechenden Langloch 14 gleitet. Die Stativschelle 12 verdeckt das Langloch 14 und ermöglicht die Anbringung des Gerätes an einem Stativ. Das Gerät gestattet auf vorteilhafte Weise eine präzise Fokussierung und ist ohne großen Montage-Aufwand mittels automatisch herstellbarer Drehteile vorteilhaft zu fertigen.

Die Brennweiten betragen für die Wechselobjektive Oa 20, 40 und 80 mm, das fest eingebaute Objektiv Ov hat eine Brennweite von 10 mm, und die Okulare mit einer Vergrößerung von 5 ×, 10 × und 15 × sind wechselweise einsetzbar. Der Einsatzbereich liegt bei Vergrößerungen zwischen 10 × und 40 ×.

Unter Zuhilfenahme der Tabelle wird die Handhabung des Gerätes beispielhaft erläutert. Die aufgrund der Ausdehnung des Objekts sich ergebende notwendige Schärfentiefe bedinge für das Objektiv Oa einen Abbildungsmaßstab von beta a = 1/5. Die zugehörige Gegenstandsweite beträgt 6 fa. Mit den ausgestatteten Brennweiten für das Objektiv Oa ergeben sich näherungsweise Arbeitsabstände von 120 mm bei fa = 20 mm, 240 mm bei fa = 40 mm und 480 mm bei fa = 80 mm. Das Objektiv liefert gerätebedingt eine 15fache Vergrößerung. Mit dem 10fach vergrößernden Okular entsteht eine 30fache Gesamtvergrößerung (1/5 × 15 × 10).

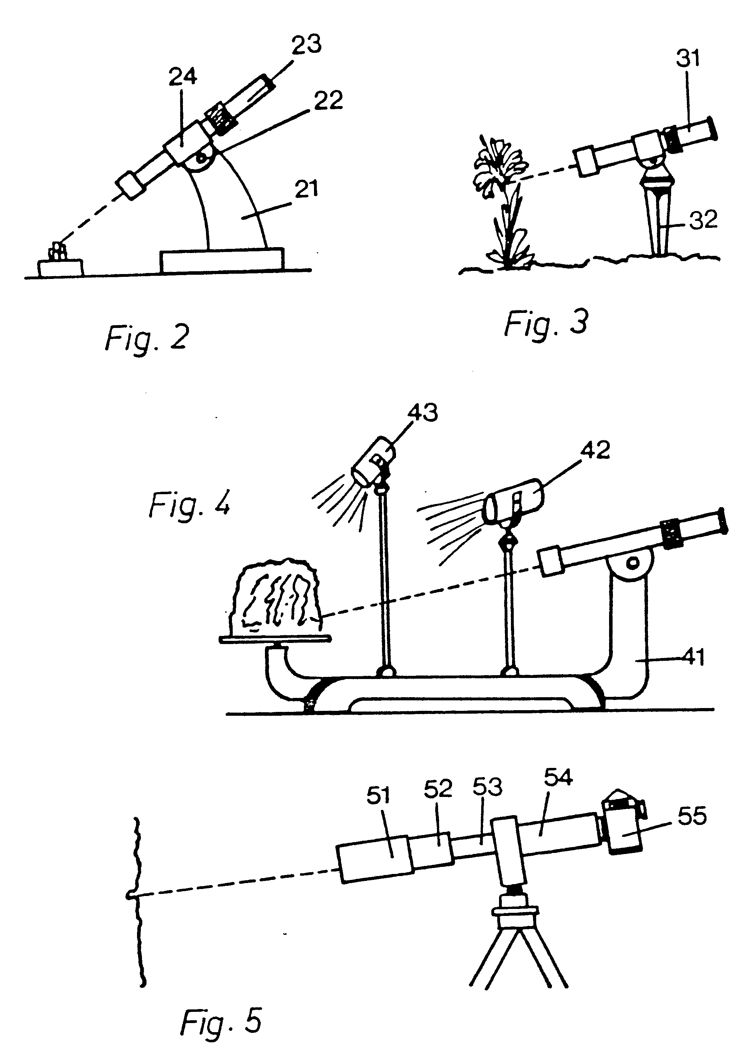

Fig. 2 zeigt die Ausführungsform nach Fig. 1 mit einem Tisch-Stativ 21, an dem das optische Gerät 23 mittels Stativschelle 24 und Rändelschraube 22 befestigt ist.

Fig. 3 zeigt das optische Gerät 31 an einem Erdspieß 32 befestigt, mit welchem es vorteilhaft in der freien Natur zur Beobachtung kleiner Objekte eingesetzt werden kann.

Fig. 4 zeigt eine Ausführungsform für höhere Ansprüche zur Anwendung in Wissenschaft und Routine. An dem Stativ 41 lassen sich in verschiedenen Positionen die Leuchten 42 und 43 anbringen, wodurch eine freie Lichtführung zum Zwecke der plastischen Ausleuchtung ermöglicht wird.

Fig. 5 zeigt die Ausführungsform zur vorteilhaften Anwendung beispielsweise in der medizinischen Kolposkopie sowie zur Spurenuntersuchung und Registrierung in der Kriminalistik. Der vordere Geräteteil 51 trägt in sich das weiter oben mit Oa bezeichnete vordere Objektiv, das auswechselbar ist, und ist über eine allgemein bekannte Schneckengangfassung mit dem Tubus 52 verbunden, der wiederum an dem Tubus 53 angekuppelt ist, in welchem das weiter oben mit Ov bezeichnete Objektiv angebracht ist. Der hintere Tubus 54 schafft den erforderlichen Auszug für das im Tubus 53 befindliche Objektiv Ov und nimmt die Kamera 55 auf. Die Tuben 52 und 53 sind an allgemein bekannter Weise mittels Bajonett- und in einer einfacheren Ausführung mit Schraubgewinde verbunden, wodurch das im Tubus 53 angebrachte Objektiv Ov leicht auswechselbar ist.

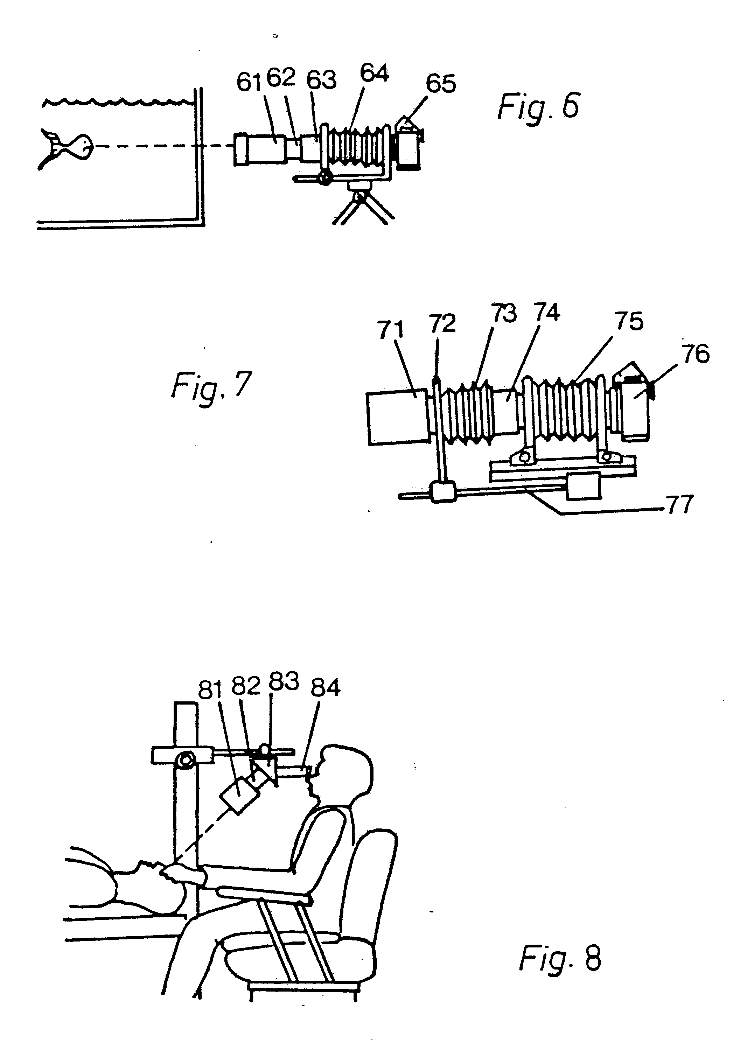

Fig. 6 zeigt eine einfachere Ausführung für Zwecke der Amateur-Fotografie. Der vordere Geräteteil 61 mit dem oben als Oa bezeichneten Objektiv, das auswechselbar ist, und mit einer eingebauten Schneckengangfassung ist über diese mit dem Zwischentubus 62 verbunden, welcher wiederum am hinteren Geräteteil 63 mit dem darin angebrachten auswechselbaren, oben mit Ov bezeichneten Objektiv angekuppelt ist. Der für das Objektiv Ov erforderliche Auszug wird mit einem handelsüblichen Balgenauszugsgerät (64) erreicht, an dem die Kamera 65 befestigt ist.

Fig. 7 zeigt eine weitere vorteilhafte Ausführungsform für Zwecke der Amateur-Fotografie. Der vordere Geräteteil 71 mit dem darin befindlichen Objektiv Oa ist über eine allgemein bekannte Schneckengangfassung an die auf der Schiene 77 verschieblich angebrachten Trägerstandarte 72 angekuppelt. Der hintere Geräteteil 74 mit dem darin befindlichen Objektiv Ov ist an ein handelsübliches Balgenauszugsgerät 75 mit daran angebrachter Kamera 76 angekuppelt und mit der Trägerstandarte 72 mittels des Balgens 73 lichtdicht verbunden. Beim Fokussieren erfolgt die Grobeinstellung zunächst durch Verschieben der Trägerstandarte 72, während die Feineinstellung mittels der im vorderen Geräteteil befindlichen Schneckengangfassung geschieht. Bei diesem Gerät läßt sich nach Abkuppeln des vorderen Geräteteils 71, an dessen Stelle eine sogenannte Dia-Halterung ankuppeln, wodurch der hintere Geräteteil 74, die Trägerstandarte 72 mit Schiene 77 und Balgen 73 in vorteilhafter Weise als Dia-Kopier-Vorrichtung zu verwenden sind. Für ein Balgenauszugsgerät 75 mit eingebautem Einstellschlitten, der sich zur Grob-Fokussierung eignet, wird eine einfachere Version des Gerätes mit fest an der Schiene 77 angebrachter Trägerstandarte 72 ausgeführt.

Fig. 8 zeigt die Ausführungsform zum Einsatz in verschiedenen Gebieten der Mikro-Chirurgie. Der vordere Geräteteil 81 mit dem auswechselbar eingebauten Objektiv Oa ist am hinteren Geräteteil 82 mit dem auswechselbar eingebauten Objektiv Ov angekuppelt. Der hintere Geräteteil 82 ist wiederum an einem Zwischenstück 83 befestigt, in welchem mittels eingebauter Prismen in allgemein bekannter Weise eine Strahlenumlenkung stattfindet. Am anderen Ende des Zwischenstücks 83 ist der Okulartubus 84 zur Aufnahme auswechselbarer Okulare angebracht. Durch den vorwählbaren Arbeitsabstand kann der Operateur eine bequeme und ermüdungsfreie Position einnehmen.

0 070 847

## Patentansprüche

1. Optisches Gerät für große Abbildungsmaßstäbe und vorwählbarem Arbeitsabstand sowohl für visuelle Beobachtung als auch für photographische, kinematographische oder elektronische Kameras, dadurch gekennzeichnet, daß längs einer optischen Achse zwei Objektive ($O_a$, $O_v$) axial verschieblich in der Weise angeordnet sind, daß das erste, objektseitige Objektiv ($O_a$) unabhängig vom endgültigen Abbildungsmaßstab ein gestauchtes Raumbild entwirft und das zweite, betrachter- bzw. kameraseitig gelegene Objektiv ($O_v$) von diesem gestauchten Raumbild ein Bild mit dem endgültigen Abbildungsmaßstab entwirft, wobei der Arbeitsabstand durch Wahl einer entsprechenden Brennweite des ersten, objektseitigen Objektivs ($O_a$) festgelegt wird.

2. Optisches Gerät nach Anspruch 1, dadurch gekennzeichnet, daß die beiden Objektive in Tuben (11, 16) befestigt sind.

3. Optisches Gerät nach Anspruch 2, dadurch gekennzeichnet, daß die beiden Tuben (11, 16) ineinander gleiten und deren gegenseitige Verschiebung zum Zwecke der Fokussierung mittels eines durch eine vorgespannte Feder (15) spielfrei gedrückten Schraubgewindes (18) geschieht.

4. Optisches Gerät nach Anspruch 2, dadurch gekennzeichnet, daß die beiden Tuben (11, 16) zum Zwecke der Fokussierung über eine Schneckengangfassung miteinander verbunden sind.

5. Optisches Gerät nach Anspruch 3 oder 4, dadurch gekennzeichnet, daß der das zweite, betrachter- bzw. kameraseitig gelegene Objektiv ($O_v$) tragende Tubus (16) mit einem Anschluß zur Anbringung an ein Balgenauszugsgerät (75) versehen ist.

6. Optisches Gerät nach Anspruch 1, dadurch gekennzeichnet, daß das erste, objektseitige Objektiv ($O_a$) an einem Tubus (71) befestigt ist und dieser über eine Schneckengangfassung an eine Trägerstandarte (72) gekuppelt ist, die auf einer Schiene (77) axial verschieblich ist und daß das zweite, betrachter- bzw. kameraseitige Objektiv an einem Tubus (74) befestigt ist, der mit einem Anschluß zur Anbringung an einem allgemein bekannten Balgenauszugsgerät (75) versehen ist, welches auf der die Trägerstandarte (72) tragende Schienen (77) aufsitzt und daß die lichtdichte Verbindung zwischen der Trägerstandarte (72) und dem rückwärtigen, das zweite, betrachterseitige Objektiv tragenden Tubus (74) mittels eines Balgens (73) geschieht (Fig. 7).

7. Optisches Gerät nach Anspruch 6, dadurch gekennzeichnet, daß der das erste, objektseitige Objektiv ($O_a$) tragende und an der Trägerstandarte (72) gekuppelte Tubus (71) gegen eine in gleicher Weise ankuppelbare Dia-Positiv-Halterung austauschbar ist, so daß die Trägerstandarte (72) mit der sie tragenden Schiene (77) sowie der das zweite, betrachter- bzw. kameraseitige Objektiv tragende Tubus (74) zusammen mit dem als lichtdichte Verbindung zwischen diesem Tubus (74) und der Trägerstandarte (72) dienenden Balgen (73) auch als Teile einer Dia-Positiv-Kopiervorrichtung zu verwenden sind.

## Claims

1. Optical apparatus for large-scale enlargement and preselectable working distance, for visual observation and also for photographic, cinematographic or electronic cameras, characterised in that along an optical axis two lenses ($O_a$, $O_v$) are disposed so as to be axially displaceable in such a way that the first lens ($O_a$) on the object side provides a compressed stereogram independent of the final image scale and the second lens ($O_v$) located on the observer or camera side provides from this compressed stereogram a picture with the final image scale, whereby the working distance is determined by selecting an appropriate focal length for the first lens ($O_a$) on the object side.

2. Optical apparatus according to claim 1, characterised in that the two lenses are secured in tubes (11, 16).

3. Optical apparatus according to claim 2, characterised in that the two tubes (11, 16) slide within each other and in that their relative displacement for the purpose of focussing is achieved by means of a screw thread (18) held against free play by a prestressed spring (15).

4. Optical apparatus according to claim 2, characterised in that the two tubes (11, 16) are connected together by a worm adjustment for the purpose of focussing.

5. Optical apparatus according to claim 3 or 4, characterised in that the tube (16) which carries the second lens ($O_v$) located on the observer or camera side is provided with a connection for securing to a bellows extension device (75).

6. Optical apparatus according to claim 1, characterised in that the first lens ($O_a$) on the object side is mounted on a tube (71) and that this is coupled via a worm adjustment to a carrier (72), which is axially displaceable on a rail (77), and in that the second lens located on the observer or camera side is mounted on a tube (74), which is provided with a connection for securing to a bellows extension device (75) known per se, which device is mounted on the rails (77) carrying the carrier (72) and in that the light-tight connection between the carrier (72) and the rear tube (74) carrying the second lens located on the observer side is effected (Fig. 7) by means of a bellows (73).

7. Optical apparatus according to claim 6, characterised in that the tube (71) which carries the first lens ($O_a$) located on the object side and is coupled to the carrier (72) is interchangeable with a

6

transparency holder couplable in the same way, so that the carrier (72) with the rail (77) carrying it and the tube (74) carrying the second lens located on the observer or camera side together with the bellows (73) serving as light-tight connection between this tube (74) and the carrier (72) may also be used as parts of a transparency-copying device.

## Revendications

1. Appareil optique pour grandes échelles de reproduction et distance de travail pouvant être choisi à l'avance, aussi bien pour l'observation visuelle que pour les appareils de prise de vues photographiques, cinématographiques ou électroniques, caractérisé en ce que le long d'un axe optique, deux objectifs ($O_a$, $O_v$) sont disposés de manière à pouvoir coulisser axialement de telle sorte que le premier objectif ($O_a$), situé du côté de l'objet, forme, indépendamment de l'échelle définitive de reproduction, une image écrasée le long de l'axe optique et que le deuxième objectif ($O_v$), situé du côté de l'observateur ou de l'appareil de prise de vues, forme de cette image écrasée une image ayant l'échelle définitive de reproduction, la distance de travail étant fixée par choix d'une distance focale correspondante du premier objectif ($O_a$), situé du côté de l'objet.

2. Appareil optique selon la revendication 1, caractérisé en ce que les deux objectifs sont fixés dans des tubes (11, 16).

3. Appareil optique selon la revendication 2, caractérisé en ce que les deux tubes (11, 16) glissent l'un dans l'autre et que leur coulissement relatif, aux fins de la mise au point, s'effectue au moyen d'un filetage (18) poussé sans jeu par un ressort à précharge (15).

4. Appareil optique selon la revendication 2, caractérisé en ce que les deux tubes (11, 16) sont reliés entre eux, aux fins de la mise au point, par l'intermédiaire d'une monture à liaison à roue et vis sans fin.

5. Appareil optique selon l'une des revendications 3 et 4, caractérisé en ce que le tube (16) portant le deuxième objectif ($O_v$), situé du côté de l'observateur ou de l'appareil de prise de vues, est muni d'un raccordement pour la disposition sur un appareil à tirage de soufflet (75).

6. Appareil optique selon la revendication 1, caractérisé en ce que le premier objectif ($O_a$), situé du côté de l'objet, est fixé à un tube (71) et que celui-ci est accouplé, par l'intermédiaire d'une monture à liaison à roue et vis sans fin, à un corps avant porteur (72) qui peut coulisser axialement sur une glissière (77), et en ce que le deuxième objectif, situé du côté de l'observateur ou de l'appareil de prise de vues, est fixé à un tube (74) qui est muni d'un raccordement pour la disposition sur un appareil à tirage de soufflet (75) généralement connu, qui est monté sur la glissière (77) portant le corps avant porteur (72), et en ce que la liaison étanche à la lumière entre le corps avant porteur (72) et le tube arrière (74) portant le deuxième objectif, situé du côté de l'observateur, s'effectue au moyen d'un soufflet (73).

7. Appareil optique selon la revendication 6, caractérisé en ce que le tube (71) portant le premier objectif ($O_a$) situé de côté de l'objet, tube qui est accouplé au corps avant porteur (72), peut être remplacé par une monture de diapositives pouvant être accouplée de la même façon, de sorte que le corps avant porteur (72), avec la glissière (77) qui le porte, ainsi que le tube (74) portant le deuxième objectif, situé du côté de l'observateur ou de l'appareil de prise de vues, peuvent aussi être utilisés, avec le soufflet (73) servant à la liaison étanche à la lumière entre ce tube (74) et le corps avant porteur (72), comme parties d'un appareil de copiage de diapositives.

7

Fig. 1

**Fig. 2**

**Fig. 3**

**Fig. 4**

**Fig. 5**

Fig. 6

Fig. 7

Fig. 8